# EUROPEAN PATENT APPLICATION

(11) **EP 1 283 604 A2**
(43) Date of publication of application: **12.02.2003**
(21) Application number: 02017659.0
(22) Date of filing: 06.08.2002
(51) Int. Cl.: H04B 7/08

(54) **Antenna switching receiver apparatus**

(30) Priority: 10.08.2001 JP 2001244734
(71) Applicant: Pioneer Corporation, Meguro-ku, Tokyo (JP)
(72) Inventor: Ono, Yasushi, Pioneer Corporation, Kawagoe Koujou, Kawagoe-shi, Saitama-ken 350-8555 (JP)
(74) Representative: Sajda, Wolf E., Dipl.-Phys.

(57) **Abstract**

A receiver which selectively switches an antenna which provides a reception signal with a good signal usability. The receiver cuts off a noise detecting filter during a predetermined cut-off period τ after an antenna has been selectively switched by a switching circuit (8). The presence/absence of a noise component Dn delivered by the noise detecting filter (15) is determined in accordance with the logic value of binary data Dc delivered by a comparator (16). The presence/absence of the noise component Dn is thus determined after the predetermined period τ. This allows for preventing the effect of an impulse noise irrespective of the impulse noise produced when the antenna selectively switched provides a reception signal with a good signal usability, thereby making it possible to use the selected antenna for providing a reception signal with a good signal usability. Thus, it is possible to prevent improper control on the switching of antennas.

## Description

### BACKGROUND OF THE INVENTION

The present invention relates to a receiver for appropriately switching a plurality of antennas to select one of the antennas which provides a reception signal with a good signal usability.

The present application claims priority from Japanese Application No. 2001-244734, the disclosure of which is incorporated herein by reference for all purposes.

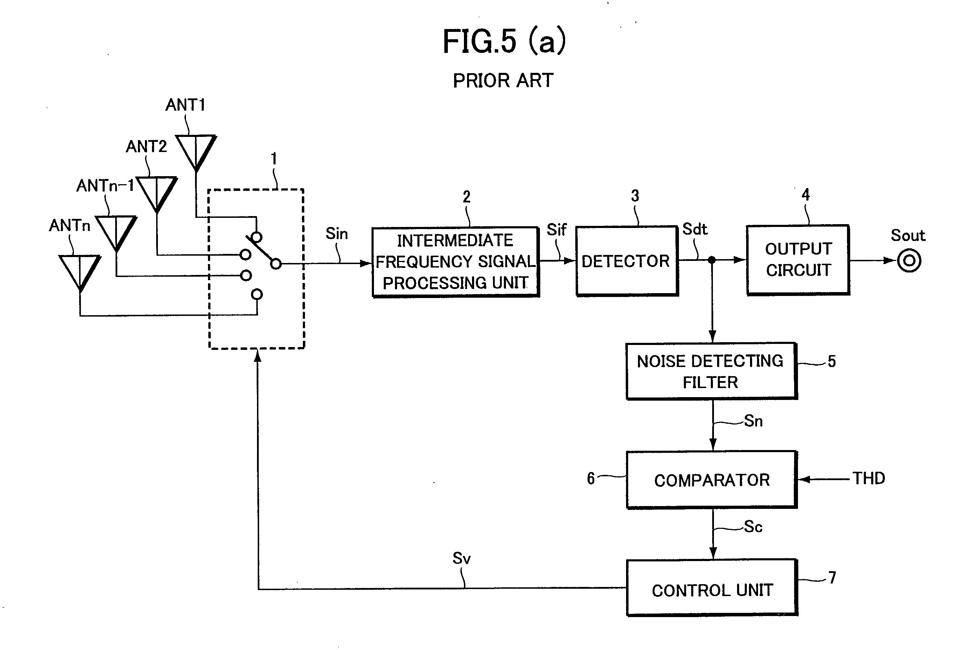

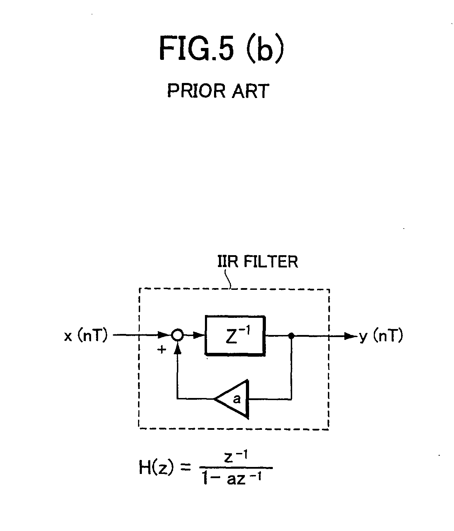

As a receiver for appropriately switching a plurality of antennas to select one of the antennas which provides a reception signal with a good signal usability, conventionally known is an analog diversity receiver as shown in Fig. 5(a).

This receiver has a plurality (n) of antennas ANT1, ANT2, ..., ANTn for receiving incoming waves to produce high-frequency reception signals, which are individually switched and selected in a switching circuit 1. The receiver then downconverts a high-frequency reception signal Sin from the selectively switched antenna in an intermediate frequency signal processing unit 2.

Then, a detector 3 detects an intermediate frequency signal SIF delivered by the intermediate frequency signal processing unit 2 to thereby generate a detected signal Sdt. The detected signal Sdt is in turn supplied to an output circuit 4 ( comprising an audio and a video amplifier) to be reproduced as a reproduction signal Sout.

In addition, the receiver comprises a noise detecting filter 5, a comparator 6, and a control unit 7, for selecting an antennas providing a reception signal with a good signal usability.

The noise detecting filter 5, an analog filter, comprises a combination of a high-pass filter and a band-pass filter, allowing a noise component Sn contained in the detected signal Sdt to pass therethrough.

The comparator 6 or a so-called analog comparator detects a level of the noise component Sn in accordance with a predetermined threshold THD. The comparator 6 delivers a binary signal Sc which takes on a logic "H" level for a noise component Sn greater than the threshold THD and a logic "L" level for a noise component Sn less than the threshold THD.

The control unit 7 examines the logic value of the binary signal Sc to determine whether or not a selected antenna provides a reception signal with a good signal usability. If the antenna is determined to provide a reception signal with a poor signal usability, the control unit 7 controls the switching circuit 1 with a switching control signal Sv, thereby selectively switching the antenna to another.

In other words, the control unit 7 determines that the selected antenna provides a reception signal with a good signal usability when the binary signal Sc is a logic "L" level, then directing the switching circuit 1 to allow the antenna to continue providing reception signals. On the other hand, the control unit 7 determines that the selected antenna does not provide a reception signal with a good signal usability when the binary signal Sc is a logic "H" level, then directing the switching circuit 1 to selectively switch the antenna to another. The control unit 7 checks the logic value of the binary signal Sc all the time, thereby controlling the switching circuit 1 to employ an antennas providing a reception signal with a good signal usability.

Recently, research and development has been aimed at replacing the aforementioned analog receiver by a digital receiver to suggest a digital diversity receiver which takes an advantage of digitization.

Along with component digitization, this digital diversity receiver is provided with digitized noise detecting circuitry for detecting noise in reception signals from antennas. For example, the noise detecting filter 5 or an analog filter, which is a component of the noise detecting circuitry, has been replaced with an IIR (Infinite Impulse Response) filter. The analog comparator 6 has also been replaced with a digital comparator.

As with an example shown in Fig. 5(b), the aforementioned IIR filter employed in the example comprises an adder, a delay element (z⁻¹), and a multiplier (a), provided with its fundamental transfer function H(z) = z⁻¹/ (1-az⁻¹).

An input stream x(nT), which corresponds to the detected signal Sdt shown in Fig. 5(a), is supplied to the IIR filter, while an output stream y(nT) as the noise component Sn delivered by the IIR filter is supplied to the digital comparator.

In addition to the IIR filter, known as a digital filter is a FIR (Finite Impulse Response) filter or a non-recursive digital filter. However, since a digital filter having a sharp frequency characteristic is required to detect a reception quality, the IIR filter is employed which can reduce the size of the circuit while providing a sharp frequency characteristic.

However, as shown in Fig. 5(b), a recursive digital filter such as an IIR filter has a feedback path to feed back the output stream y(nT) to the adder on the input side. This, however, may cause instability. Specifically, the output stream y(nT) corresponding to the input stream x(nT) may not converge, thereby making it difficult to accurately detect a reception quality.

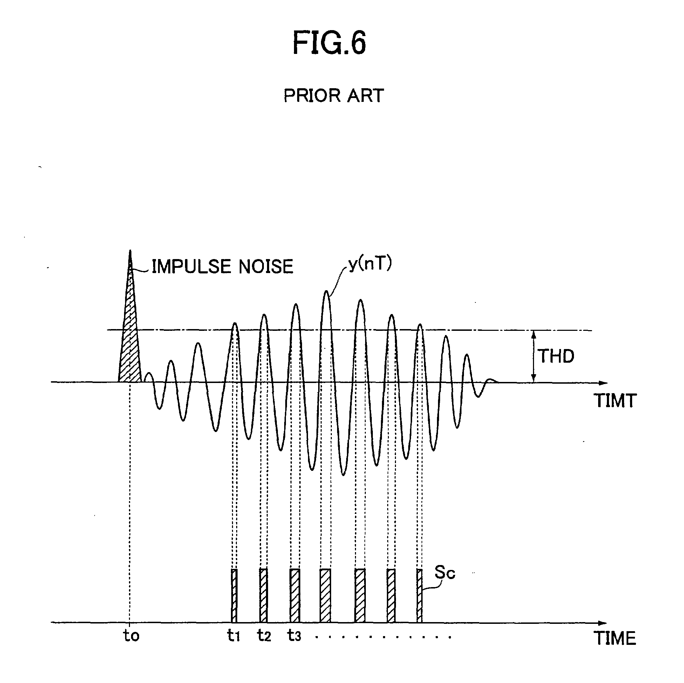

An exemplary case with such a problem will be explained more specifically with reference to Fig. 6. For example, when a noise component enters the IIR filter, its output stream y(nT) may be delivered as a noise component elongated in terms of time as shown in the figure.

In other words, assume that the aforementioned transfer function H(z) is expressed by an impulse response stream hn, and the output stream y(nT) is generated by a discrete convolution of the input stream x(nT) corresponding to the impulse noise and the impulse response stream hn. Thus, the output stream y(nT) is delivered as a noise component elongated in terms of time as shown in the figure.

Suppose that the output stream y(nT) as an elongated noise component enters the digital comparator and is then compared with the threshold THD. As shown at points in time t1, t2, t3, ..., this causes the binary signal Sc having a plurality of pulse trains, corresponding to the elongated noise component, to be supplied from the digital comparator to the control unit 7. This causes the control unit 7 to deliver the switching control signal Sv to the switching circuit 1 in order to selectively switch the antennas by the number of pulses supplied. Thus, the receiver performs unnecessary switching of the antennas several times for one impulse noise due to an improper determination of reception signals which is caused by the elongated impulse noise.

### SUMMARY OF THE INVENTION

The present invention has been developed in view of the aforementioned prior-art problems. It is therefore an object of the invention to provide a receiver which appropriately switches a plurality of antennas to select one of the antennas which provides a reception signal with a good signal usability.

To achieve the aforementioned object, a receiver according to the invention comprises: switching means for switching reception signals generated on a plurality of antennas to select and deliver one of the reception signals; noise detecting means having a digital filter allowing a noise component contained in the reception signal to pass therethrough, and control means for performing control on the switching means in accordance with the presence/absence of the noise component delivered from the noise detecting means. Upon performing antenna switching control on the switching means, the control means causes the noise detecting means to cut off the outgoing noise component during a predetermined period.

In the receiver configured as described above according to the invention, the noise detecting means is cut off (or prohibited) during a predetermined period upon allowing the switching means to switch the antennas. After the predetermined period has elapsed, the switching means is controlled in accordance with the presence/absence of the output (noise component) of the noise detecting means to cancel (release) the cut-off state.

Accordingly, when an impulse noise has occurred upon switching an antenna to another, cutting-off the noise detecting means can prevent the occurrence of an elongated noise component which has been conventionally problematic. In addition, after the predetermined period has elapsed, the switching means is controlled in accordance with the presence/absence of the output (noise component) of the noise detecting means to cancel the cut-off state.

This allows for preventing the effect of an impulse noise, irrespective of the impulse noise produced when the antenna selectively switched provides a reception signal with a good signal usability, thereby making it possible to use the selected antenna as an antenna which provides a reception signal with a good signal usability, without improper control on the switching means.

Furthermore, the receiver according to the invention is adapted such that instead of causing the noise detecting means to cut off the outgoing noise component, the control means stops switching control on the switching means during the predetermined period.

In the receiver configured as described above, the control means for performing control on the switching means stops (or prohibits) control on the switching of antennas during the predetermined period. Accordingly, an antenna is not switched to another during the predetermined period irrespective of an impulse noise produced when the antenna selectively switched provides a reception signal with a good signal usability, thereby making it possible to use the selected antenna as provides a reception signal with a good signal usability, without improper control on the switching means.

Furthermore, the receiver according to the invention is adapted such that the predetermined period is set at a delay time required for a newly reception signal selected by the switching means to reach the noise detecting means or at a delay time required for a newly reception signal selected by the switching means to reach the control means.

In the receiver configured as described above according to the invention, the aforementioned predetermined period is set at the delay time required for a noise to travel from the antenna to the noise detecting means or the control means. That is, noise detection is not performed during the period in which a noise produced on the antenna does not arrive at the noise detecting means or the control means but performed immediately after the aforementioned delay time. This allows for determining quickly with accuracy whether or not the selectively switched antenna provides a reception signal with a good signal usability.

### BRIEF DESCRIPTION OF THE DRAWINGS

These and other objects and advantages of the present invention will become clear from the following description with reference to the accompanying drawings, wherein:
Fig. 1 is a block diagram illustrating the configuration of a receiver according to an embodiment;
Fig. 2 is an explanatory flowchart illustrating the operation of the receiver according to the embodiment;
Fig. 3 is an explanatory view illustrating the operation of the receiver according to the embodiment with reference to a practical example;
Fig. 4 is an explanatory view illustrating the operation of the receiver according to the embodiment, where an impulse noise occurs;
Fig. 5 is a block diagram illustrating the configuration of a prior-art receiver; and
Fig. 6 is an explanatory view illustrating the operation of the prior-art receiver.

### DETAILED DESCRIPTION OF THE PREFERRED EMBODIMENTS

Hereinafter, an embodiment of the present invention will be described with reference to the drawings. As a preferred embodiment, a diversity receiver is described to which the invention is applied.

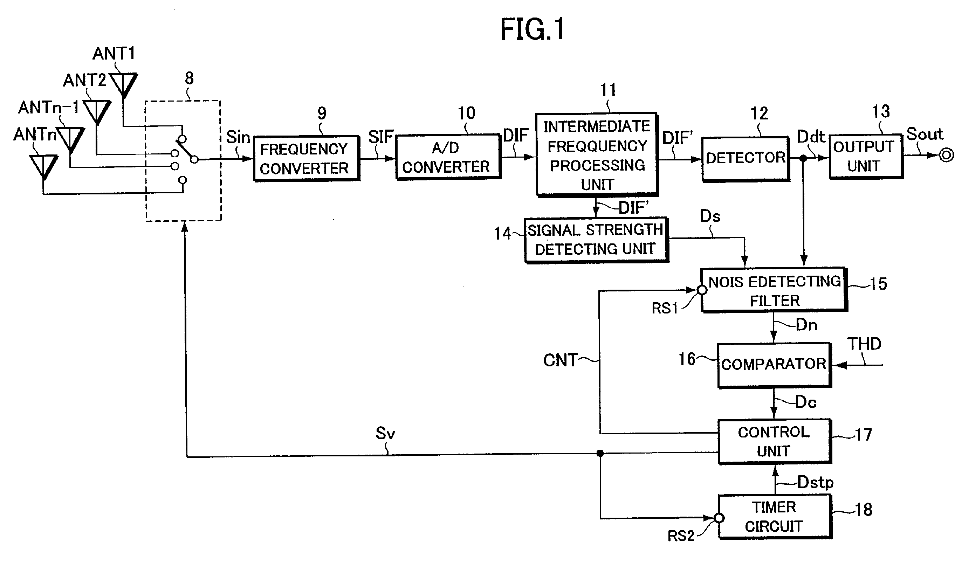

Fig. 1 is a block diagram illustrating the configuration of the receiver, which has a switching circuit 8 interposed between a plurality (n) of antennas ANT1, ANT2, ..., ANTn and a frequency converter 9. The switching circuit 8 switches the antennas to exclusively connect between one antenna and the frequency converter 9 in accordance with a switching control signal Sv from a control unit 17 (to be described later) . This makes it possible to select a high-frequency reception signal Sin delivered only from this antenna and supply the signal to the frequency converter 9.

The frequency converter 9 downconverts the high-frequency reception signal Sin supplied from one antenna via the switching circuit 8, thereby delivering an intermediate frequency signal SIF.

Then, an analog-to-digital (A/D) converter 10 converts the intermediate frequency signal SIF in analog form to intermediate frequency data DIF in digital form, which is in turn supplied to an intermediate frequency processing unit 11. The intermediate frequency processing unit 11 yields intermediate frequency data DIF' in a predetermined data format, which is in turn supplied to a detector 12 and a signal strength detecting unit 14.

The detector 12 performs a predetermined digital signal processing on the intermediate frequency data DIF' to thereby generate detected data Ddt, which is in turn supplied to an output unit 13 to deliver a reproduced signal Sout.

Among other things, the output unit 13 converts the detected data Ddt in digital form to a detected signal in analog form, which is then power amplified to yield the reproduced signal Sout.

The signal strength detecting unit 14 detects the level of the intermediate frequency data DIF', thereby delivering detected data Ds, referred to as "S-meter", which corresponds to the level of the high-frequency reception signal Sin. In other words, the level of the high-frequency reception signal Sin is estimated in accordance with the intermediate frequency data DIF', thereby allowing the reception condition of an antenna being selected to be detected quantitatively in the form of the detected data Ds.

The receiver further comprises a noise detecting filter 15, a comparator 16, the control unit 17, and a timer circuit 18, which form the main portion of noise detecting circuitry for detecting an antennas providing a reception signal with a good signal usability.

The comparator 16 is made up of a so-called digital comparator, while the control unit 17 comprises a microprocessing unit (MPU) and a digital signal processing unit (DSP), which have computing and control functions, and logic circuits.

The noise detecting filter 15 is made up of an IIR filter, designed to receive as an input stream x(nT) either one of the detected data Ds delivered by the signal strength detecting unit 14 or the detected data Ddt delivered by the detector 12.

That is, for purposes of illustration, Fig. 1 shows the noise detecting filter 15 with its inputs connected to the detector 12 and the signal strength detecting unit 14. However, connections are actually made such that either one of the detected data Ds or the detected data Ddt is supplied to the noise detecting filter 15. The noise detecting filter 15 delivers, as an output stream y(nT), a noise component Dn contained in either the detected data Ds or the detected data Ddt, which is in turn supplied to the comparator 16.

In addition, the noise detecting filter 15 is provided with a reset terminal RS1 for cutting off an outgoing noise component Dn to the comparator 16. A cut-off control signal CNT supplied from the control unit 17 to the reset terminal RS1 acts to cut off the outgoing noise component Dn.

Any one of the following conceivable arrangements may be employed to cut off the outgoing noise component Dn. That is, the operation of the noise detecting filter 15 itself may be forcedly reset to thereby stop the operation. Alternatively, the noise detecting filter 15 may be provided with a switching device at its output end so that the switching device is turned off by the cut-off control signal CNT to thereby cut off the outgoing output stream y(nT). In conclusion, a necessary configuration is only that the supplied cut-off control signal CNT cuts off the outgoing noise component Dn in the form of the output stream y(nT) from the noise detecting filter 15 to the comparator 16.

The comparator 16 compares the noise component Dn with a predetermined digital threshold THD, and then supplies to the control unit 17 the binary data Dc which takes on a logic "H" level for a noise component Dn greater than the threshold THD and a logic "L" level for a noise component Dn less than the threshold THD.

As described above, the control unit 17 comprises the microprocessing unit (MPU) to execute pre-set computer programs, thereby centrally performing control on the entire operation of the receiver.

Furthermore, the control unit 17 is connected with the timer circuit 18 having a reset start terminal RS2, thereby performing control on the switching circuit 8 and the noise detecting filter 15 in response to the binary data Dc from the comparator 16 and switchover disabling data Dstp delivered by the timer circuit 18.

The functionality of the control unit 17 is explained below in more detail. Suppose that the noise component Dn is greater than the threshold THD, thereby changing the binary data Dc delivered by the comparator 16 from a logic "L" level to a logic "H" level. In this case, the control unit 17 determines that an antenna being currently selected provides a reception signal with a poor signal usability. Then, the control unit 17 outputs the switching control signal Sv to cause the switching circuit 8 to switch the antenna to another. Substantially at the same time the switching control signal Sv is delivered, the control unit 17 outputs the cut-off control signal CNT to set the noise detecting filter 15 in a cut-off state. The control unit 17 also causes the timer circuit 18 to be reset and start counting a predetermined time τ (hereinafter referred to as "cut-off time") in accordance with the switching control signal Sv.

The switchover disabling data Dstp is being delivered until the timer circuit 18 has completely counted the cut-off time τ. During the switch-over disabling data Dstp being delivered or the cut-off time τ, the control unit 17 stops switching control on the switching circuit 8.

When the switching disabling data Dstp is no longer delivered by the timer circuit 18 after the cut time τ has elapsed, the control unit 17 stops delivering the cut-off control signal CNT, thereby canceling the cut-off state of the noise detecting filter 15. The control unit 17 examines the logic value of the binary data Dc produced in response to the output stream y(nT) after the cancellation. If the logic value is a logic "L" level, then the control unit 17 determines that the antenna provides a reception signal with a good signal usability, thus allowing the antenna to remain in service. On the other hand, when the logic value of the binary data Dc turns to a logic "H" level during the reception by the antenna remaining in use, the control unit 17 determines that the antenna provides a reception signal with a poor signal usability. Then, the control unit 17 supplies the switching control signal Sv to the switching circuit 8, thereby selectively switching the antenna to another. The control unit 17 performs this procedure repeatedly thereafter.

The cut-off time τ which is set in the timer circuit 18 is set at a propagation delay time which is required for the high-frequency reception signal Sin produced in one of the antennas ANT1 to ANTn to reach the noise detecting filter 15 in the form of the detected data Ds or the detected data Ddt. Alternatively, the cut-off time τ is set at a propagation delay time which is required for the high-frequency reception signal Sin produced in one of the antennas ANT1 to ANTn to pass through the noise detecting filter 15 and then be delivered as the noise component Dn.

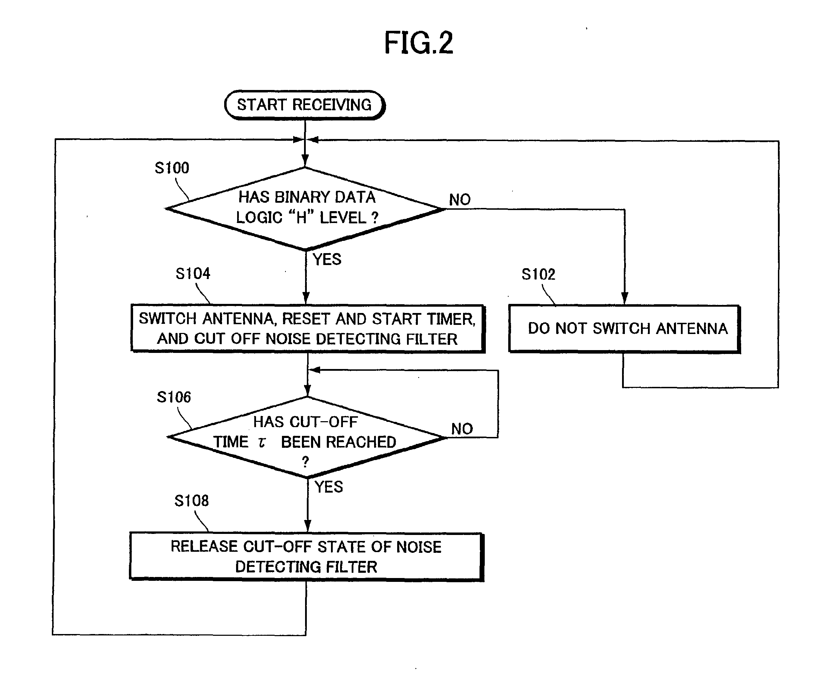

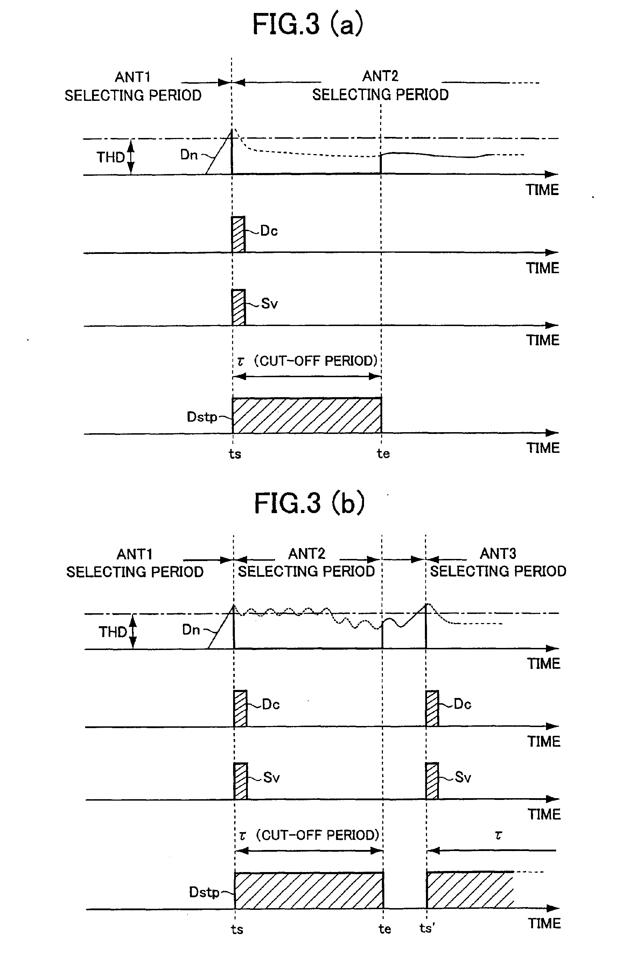

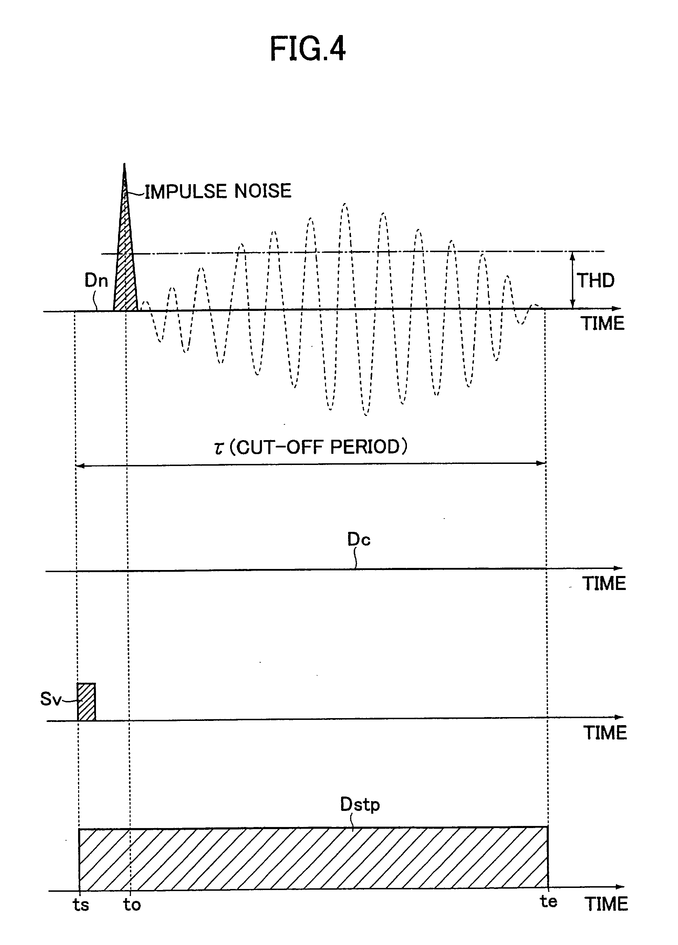

Now, referring to Figs. 2 to 4, the operation of the receiver will be explained in detail. Fig. 2 is a flowchart illustrating the operation of the receiver performed under the control of the control unit 17. Figs. 3 and 4 are more detailed explanatory views illustrating the operation in accordance with the flowchart.

In Fig. 2, one of the antennas ANT1 to ANTn, which has been selectively switched, starts to receive incoming waves. In step S100, the process first determines whether or not the binary data Dc is a logic "H" level. If the logic value is a logic "L" level, the process determines in step S102 that the antenna being currently selected provides a reception signal with a good signal usability, thereby repeating the procedure from the step S100 without switching the antenna.

On the other hand, if the binary data Dc is a logic "H" level in the step S100, the process proceeds to step S104, where the switching control signal Sv and the cut-off control signal CNT are generated. This causes the antenna to be switched to another and the timer circuit 18 to be reset and started as well as the noise detecting filter 15 to be set in the cut-off state.

Then, in step S106, the process determines by examining the switching disabling data Dstp whether or not the time counted at the timer circuit 18 has reached the cut-off time τ. If not, the process repeats the procedure of the step S106. If the time has reached the cut-off time τ, the process then proceeds to step S108.

In step S108, the process stops the delivery of the cut-off control signal CNT in response to the switchover disabling data Dstp which is no longer delivered by the timer circuit 18. This causes the cut-off state of the noise detecting filter 15 to be canceled, and thereafter the process repeats the procedure from the step S100.

Now, the operation in the flowchart of Fig. 2 is described with reference to a more specific example shown in Fig. 3(a).

Suppose that the antenna ANT1 provides a reception signal with a poor signal usability at some time point ts, and thus a noise component Dn greater than the threshold THD is produced, thereby generating the binary data Dc (step S100) . At this time, the process causes the switching control signal Sv to switch the antenna ANT1 to the antenna ANT2, and the timer circuit 18 to be activated to produce the switchover disabling data Dstp, thereby stopping the switching of the antennas during the cut-off time τ (a cut-off period). Furthermore, the cut-off control signal CNT generated almost at the same time the switching control signal Sv is produced causes the noise detecting filter 15 to be cutoff, thereby maintaining the noise detecting filter 15 in its cut-off state until the cut-off time τ has elapsed (steps S104 and S106).

During the cut-off period, this causes the noise detecting filter 15 not to deliver the noise component Dn as well as the antennas are not switched since the logic value of the binary data Dc remains at a logic "L" level.

Then, suppose that the cut-off state of the noise detecting filter 15 is canceled at a time point te at which the cut-off time τ has elapsed (step S108), and then the process examines a reception signal provided by the antenna ANT2 in step S100 to determine that the antenna ANT2 provides a good reception signal. In this case, the process performs the procedure of the step S102, thereby allowing the antenna ANT2 to continue providing a reception signal with a good signal usability.

Now, another specific example will be described with reference to Fig. 3(b). In this example, the antenna ANT1 provides a reception signal with a poor signal usability at some time point ts, at which the antenna ANT1 is selectively switched to the antenna ANT2. Then, after the cut-off period from a time point ts to a time point te, the process determines whether or not the antenna ANT2 truly provides a reception signal with a good signal usability. If the antenna ANT2 provides a reception signal with a good signal usability, the antenna ANT2 remains in use. On the other hand, suppose that the antenna ANT2 provides a reception signal with a poor signal usability at a time point ts' as shown in the figure, a noise component Dn greater than the threshold THD will be generated, causing the logic value of the binary data Dc to be a logic "H" level. At this time, the process switches the antenna ANT2 to the antenna ANT3 to select an antenna which provides a reception signal with a better signal usability. Then, the cut-off time τ is again set starting from the time point ts' . In this way, since the noise detecting filter 15 is maintained in the cut-off state during the cut-off time τ, the antennas are not switched and the process determines after the cut-off time τ has elapsed whether or not the antenna ANT3 truly provides a reception signal with a good signal usability.

In this manner, the antennas are switched sequentially, thereby making it possible to ensure a reception signal with a good signal usability.

Those skilled in the art may think that the procedure is not performed quickly since the antennas are switched after the cut-off time τ has elapsed. However, since the cut-off time τ is set at the propagation delay time over the path between the antennas ANT1 to ANTn and the noise detecting filter 15 and thus very short, the cut-off time τ does not interfere with the procedure.

What should be noted among other things is to switch the antennas immediately after the process has determined that the binary data Dc has turned to a logic "H" level. In this case, the switching of the antennas becomes too sensitive, thereby causing the switching of the antennas to happen too frequently. However, in this embodiment, the antennas are switched only when the binary data Dc has turned to a logic "H" level at time point te after the cut-off time τ has elapsed. It is therefore possible to set the aforementioned switching sensitivity at an appropriate value.

Now, another specific example will be described with reference to Fig. 4. Fig. 4 shows the operation which is performed when an impulse noise is generated during the switching of the antennas.

For example, suppose that the antenna ANT1 provides a reception signal with a poor signal usability at a time point ts, at which the antenna ANT1 is selectively switched to the antenna ANT2, thereby causing an impulse noise to be generated. In this case, the noise detecting filter 15 delivers the noise component Dn as an impulse response stream y(nT).

When the noise component Dn is greater than the threshold THD and the binary data Dc takes on a logic "H" level, the switching control signal Sv allows for switching the antennas. In addition, the cut-off control signal CNT causes the noise detecting filter 15 to be cut off as well as the timer circuit 18 to start counting.

In this way, the noise detecting filter 15 is maintained in the cut-off state during the cut-off time τ (the cut-ff period) from the time point ts at which the antenna was switched. Therefore, it is possible to prevent the impulse noise from affecting the comparator 16 and the control unit 17. Accordingly, it is possible to prevent the antennas from being accidentally switched due to an impulse noise.

As experienced in the prior art, the noise detecting filter 15 which is not cut-off may cause an elongated noise component as shown by the dotted line in Fig . 4. However, in this embodiment, the noise detecting filter 15 is set in the cut-off state. This prevents any elongated noise component, thereby allowing the noise component Dn of the noise detecting filter 15 to remain substantially at zero as well as the logic value of the binary data Dc to remain at a logic "L" level. After the cut-off time τ has elapsed or at the time point te at which the elongated noise component converges, the process determines whether or not the antenna ANT2 truly provides a reception signal with a good signal usability. This makes it possible to determine the reception quality with a high accuracy, which eliminates unnecessary switching of antennas resulting from improper determinations and ensures reception signals with a good signal usability.

As described above, an antenna is switched to another when the antenna provides a reception signal with a poor signal usability as shown in Figs. 3(a) and 3(b), and an impulse noise may occur upon switching an antenna to another as shown in Fig. 4. In any of these cases, the receiver according to this embodiment can properly detect the reception signal with a good or poor signal usability provided by the switched antenna, thereby making it possible to ensure a reception signal with a good signal usability.

In particular, when an impulse noise is generated, the receiver prevents the occurrence of an elongated noise which results from the characteristics of a noise detecting filter to which the IIR filter is applied. Additionally, the receiver detects noise again after the cut-off time τ has elapsed to thereby determine whether or not the antenna truly provides a reception signal with a poor signal usability. This allows for eliminating the chance of making an improper determination caused by an impulse noise, i.e., avoiding a mistaken determination indicating that the antenna provides a reception signal with a poor signal usability (regardless of a fact that the antenna is providing a reception signal with a good signal usability).

As described above, the receiver has a robust characteristic against an impulse noise, thereby providing a good effect for digitization of receivers.

On the other hand, the receiver according to this embodiment employs both the procedures for allowing the timer circuit 18 to set the cut-off time τ to prohibit the switching of antennas and for cutting off the noise detecting filter 15 during the cut-off time τ. However, the invention does not have to employ both the two procedures but may employ at least one of these procedures.

That is, the noise detecting filter 15 does not have to be cut off during the cut-off time τ so long as the control unit 17 positively stops the switching of antennas irrespective of any change in binary data Dc (when the timer circuit 18 is clocking within the cut-off time τ).

Cutting off the noise detecting filter 15 while the timer circuit 18 counts within the cut-off time τ will always provide a logic "L" level to the binary data Dc which enters the control unit 17. Thus, the control unit 17 will never switch the antennas within the cut-off time τ.

Accordingly, while the noise detecting filter 15 is cut off or during a predetermined cut-off time τ, the control unit 17 may determine based on the binary data Dc whether or not an antenna should be switched to another.

Furthermore, instead of cutting off the noise detecting filter 15, the procedure for noise detection at the comparator 16 and the control unit 17 may be prohibited.

Although in this embodiment, there is no detailed description about the specification of the IIR filter which is used as the noise detecting filter 15, the invention is not limited to the IIR filter having a fundamental specification shown in Fig. 5(b), but can employ an IIR filter of another specification. That is, the receiver according to the invention imposes no limitation on the specification of an IIR filter.

As described above, the receiver according to the invention is adapted to prohibit noise detection and antenna switching during a predetermined period after an antenna has been switched to another by switching means, thereby preventing improper determination possibly caused due to the occurrence of an elongated noise component. It is also possible to accurately check the reception signal provided by the antenna since the prohibition is released after a predetermined time has elapsed. This makes it possible to provide a receiver which can appropriately switch antennas to select one of the antennas which provides a reception signal with a good signal usability.

Furthermore, instead of cutting off the noise detecting means, switching control on the switching means can be stopped during a predetermined period. This makes it possible to prevent improper control on the switching means even when an impulse noise occurs. Thus, it is possible to provide a receiver which can appropriately switch antennas to select one of the antennas which provides a reception signal with a good signal usability.

While there has been described what are at present considered to be preferred embodiments of the present invention, it will be understood that various modifications may be made thereto, and it is intended that the appended claims cover all such modifications as fall within the true spirit and scope of the invention.

## Claims

1. A receiver comprising:
a selecting means (8) for selecting one of reception signals respectively received by a plurality of antennas (ANT1-ANTn);
noise detecting means (15) for detecting and outputting a noise component contained in said one of reception signals; and
a control means (17) for performing a control on the selecting means in accordance with a detection result of the noise detecting means (15),
wherein during a predetermined time period after the selecting means (8) has selected said one of reception signals, the control means (17) operates to stop the selecting operation of the selecting means (8).

2. The receiver according to claim 1, wherein during a predetermined time period after the selecting means (8) has selected said one of reception signals, the control means (17) operates to stop the selecting operation of the selecting means (8) by not outputting the noise component from the noise detecting means (15).

3. The receiver according to claim 1, wherein the predetermined time period is set at a delay time needed for a reception signal newly selected by the selecting means (8) to reach the noise detecting means (15).

4. The receiver according to claim 1, wherein the predetermined time period is set at a delay time needed for a reception signal newly selected by the selecting means (8) to reach the control means (17).

5. The receiver according to any one of claims 1 - 4, wherein the noise detecting means includes an IIR filter.
